# EUROPÄISCHE PATENTSCHRIFT

(11) **EP 0 950 977 B1**
(45) Veröffentlichungstag und Bekanntmachung des Hinweises auf die Patenterteilung: **18.12.2002**
(21) Anmeldenummer: 97921007.7
(22) Anmeldetag: 04.04.1997
(51) Int. Cl.: G06K 9/00, G06K 9/36, G06K 9/46, G06K 9/62, G07C 9/00

(54) **VERFAHREN UND GERÄT ZUR NUTZERIDENTIFIKATION**
USER IDENTIFICATION METHOD AND UNIT
PROCEDE ET APPAREIL D'IDENTIFICATION DE L'UTILISATEUR

(30) Priorität: 19.12.1996 RU 96124447
(43) Veröffentlichungstag der Anmeldung: 20.10.1999
(73) Patentinhaber: Delsy Electronic Components AG, 55765 Birkenfeld (DE)
(72) Erfinder: MINKIN, Viktor Albertovich, St.Petersburg, 196247 (RU); GREKOVICH, Alexandr Anatolievich, St.Petersburg, 197349 (RU); ROMANOVA, Ludmila Pavlovna, St.Petersburg, 194021 (RU); TATAURSCHIKOV, Sergei Sergeevich, St.Petersburg, 195268 (RU); SHTAM, Alexandr Iliich, St.Petersburg, 197342 (RU)
(74) Vertreter: Säger, Manfred
(86) Internationale Anmeldenummer: RU9700105
(87) Internationale Veröffentlichungsnummer: WO98027509

(56) Entgegenhaltungen:
- EP-A- 0 098 222
- EP-A- 0 468 522
- WO-A-89/02722
- WO-A-92/04689
- DE-A- 4 222 387
- FR-A- 2 674 051
- JP-A- 61 240 383
- JP-A- 62 127 979
- RU-C- 2 031 625
- US-A- 4 708 882
- US-A- 5 426 296
- FAINZILBERG L ET AL: "COMPUTER ANALYSIS AND RECOGNITION OF COGNITIVE PHASE SPACE ELECTRO-CARDIO GRAPHIC IMAGE" COMPUTER ANALYSIS OF IMAGES AND PATTERNS. INTERNATIONAL CONFERENCE,XX,XX, Seite 668-673 XP002045310

## Beschreibung

### Sachgebiet

Die Erfindung betrifft das Gebiet der Elektronik und kann in beliebigen Bereichen zum Einsatz gebracht werden, in denen eine Nutzeridentifikation erforderlich ist. Das kann auf dem Gebiet der Computertechnik und der Kriminalistik, der Medizin, der Schutz- und Einlaßkontrollsysteme sowie im Bereich des Finanz- und Bankensektors sein.

### Stand der Technik

Es sind derzeit eine Reihe von Systemen bekannt, mit denen es möglich ist, das Papillarlinienmuster der Fingerhaut mittels elektronischer Geräte zu speichern, zu bearbeiten und zu identifizieren. Ausgehend von ihren funktionellen Möglichkeiten können die daktyloskopischen Systeme in zwei Gruppen unterteilt werden:
1. Systeme, die Abbildungen von Zwischenträgern, zum Beispiel Fingerabdruckbögen, verarbeiten (siehe Reklameprospekt der Firma MORPHO Systems, 1992);
2. Systeme, in denen die daktyloskopischen Informationen direkt vom lebenden Finger gewonnen werden, das heißt sogenannte "lebende" Scanner.

Beide Systeme unterscheiden sich primär durch die unterschiedlichen Träger der daktyloskopischen Ausgangsinformation (auf der einen Seite Fingerabdruckbögen und auf der anderen Seite das Relief der Fingerhaut) sowie in ihren Einsatzgebieten.

Die Systeme der ersten Gruppe werden vorrangig im Bereich der Polizei und der Kriminalistik zur Identifizierung von Straftätern anhand vorhandener Fingerabdruckbögen oder Fingerabdruckspuren vom Tatort eingesetzt. Diese Systeme sind allerdings nicht für eine schnelle Nutzeridentifikation geeignet. Beim Lesen der Fingerabdruckbögen bzw. der Fingerabdruckspuren kommen in diesen Systemen gewöhnliche Scanner zum Einsatz (siehe Reklameprospekt der Firma MORPHO Systems, 1992), die natürlich nicht zur direkten Abnahme des daktyloskopischen Abbildes vom lebenden Finger geeignet sind. Außerdem hat der Einsatz von Zwischendatenträgern (Fingerabdruckbögen) immer Informationsverluste zur Folge, da es auf diesem Weg nicht möglich ist, Details des Hautreliefs geringer Größe zu erfassen und zu bearbeiten.

Die unmittelbar vom lebenden Finger gewonnene daktyloskopische Informationen verarbeitenden Systeme können wiederum in zwei Gruppen unterteilt werden: mit reflektiertem Licht und mit durchdringendem Licht arbeitende Systeme. Diese Unterteilung basiert auf den Funktionsprinzipien, mit denen die daktyloskopischen Primärinformationen gewonnen werden.

Dank der Entwicklung von Miniaturkameras mit Ladungsverschiebeelementen (CCDs) haben im Verlauf der vergangenen zehn Jahre daktyloskopische Kamerasysteme eine weite Verbreitung gefunden, die mit dem vom Finger reflektierten Licht arbeiten (siehe Reklameprospekt der Firma Digital Biometrics Inc., 1994). Diese Systeme nutzen den Effekt der vollständigen inneren Reflexion des Lichtes aus, das heißt das Licht wird nur von den Punkten der Prismenoberfläche reflektiert, an denen die Haut des Fingers Kontakt mit der Prismenoberfläche hat. Die Kamera fixiert dabei über ein Objektiv die reflektierte Abbildung des Hautreliefs. Derartige Systeme weisen im Vergleich zu den mit Zwischenträgern arbeitenden Systemen eine Reihe von Vorzügen auf, da sie es ermöglichen, sehr schnell rechentechnisch bearbeitbare Abbilder des Fingerhautreliefs zu gewinnen, ohne daß dabei die Finger beschmutzt werden müssen. Allerdings haben sie auch eine Reihe in ihrem Funktionsprinzip begründete Nachteile:
1. Geringe Abbildungsqualität und, daraus folgend, eine geringe Identifizierungswahrscheinlichkeit bei der Arbeit mit trockenen Fingern. Die bei der Berührung der Kontaktoberfläche mit einem trockenen Finger entstehende Kontaktfläche ist so klein, daß es praktisch nicht möglich ist, ein qualitativ hochwertiges Abbild zu erzeugen. Es hat sich erwiesen, daß bereits ein Abstand von einem Mikrometer zwischen der Fingerhaut und der Kontaktoberfläche zum vollständigen Verlust der daktyloskopischen Informationen führt. Die Entwickler dieser Systeme versuchen diesen Nachteil dadurch zu kompensieren, daß sie die Kontaktoberflächen mit speziellen Stoffen beschichten (siehe europäische Patentanmeldung Nr. 0 304 092, veröffentlicht am 22.02.1989). Dabei tritt aber das Problem der geringen mechanischen Widerstandskraft derartiger Beschichtungen zutage. Die Beschichtungen nutzen sich bereits nach einer geringen Zahl von Fingerkontakten ab.
2. Ferner hat der Einsatz von Objekten aufgrund auftretender optischer Verzerrungen und Aberrationen eine Qualitätsminderung der gewonnenen Abbilder zur Folge, da jedes zusätzliche Element in der Kette der Dateninformation eine weitere Fehlerquelle darstellt. Außerdem führt der Einsatz von Objekten zu größeren Abmaßen der Geräte, wodurch die mechanische Stabilität und Betriebssicherheit beeinträchtigt wird. Ebenso müssen Maßnahmen zur hermetischen Abdichtung des Raumes zwischen dem Objektiv und der Kontaktoberfläche bzw. zur Eliminierung loser Partikel im betreffenden Bereich ergriffen werden.

Es ist ferner ein gattungsgemäßes Verfahren nach dem Oberbegriff des Verfahrens- sowie Gerätehauptanspruchs bekannt (US-A 4 708 882).

Hieraus ist sowohl die Beleuchtung des zu untersuchenden Fingers mit Lichtimpulsen zwecks Verbesserung der Aufnahmequalität der daktyloskopischen Abbilder, wie auch die zeitliche Synchronisation der Lichtimpulse mit der Bildaufnahme bekannt.

Es ist ein Nutzeridentifikationsverfahren bekannt (russisches Patent Nr. 2031625, veröffentlicht am 27.03.1995), bei dem der Finger des Nutzers unmittelbar auf eine faseroptische Eingangsoberfläche der Kamera aufgelegt und mit einem stetigen durchdringenden Licht beleuchtet wird. Das Ausgangssignal der Kamera wird durch Computer mit dem Ziel der Identifikation des Fingerabdrucks bearbeitet. Bei diesem Verfahren haben die hervortretenden Teile des Hautreliefs mit der faseroptischen Eingangsoberfläche unmittelbaren Kontakt, und das den Finger durchdringende Licht gelangt an diesen Punkten mit wesentlich geringeren Verlusten in die Lichtleiter als an den Stellen, an denen die Lichtleiter keinen Kontakt mit der Haut des Fingers haben.

Dieses Verfahren ist frei von den genannten Nachteilen, die für die mit reflektierendem Licht arbeitenden Systeme charakteristisch sind. Es zeichnet sich durch eine bessere Qualität der gewonnenen Abbilder aus, wobei die darstellbaren Abstufungen in den Abbildungen ausschließlich durch die dynamischen Werte der eingesetzten Kamera begrenzt werden, da das Vorhandensein von Zwischenräumen zwischen der Haut und der Kontaktoberfläche nicht zu einem vollständigen Informationsverlust führt und zwischen der Größe dieses Zwischenraumes und dem durchdringenden Licht eine direkte proportionale Abhängigkeit besteht.

Allerdings hat auch dieses Verfahren gewisse Nachteile. Wie die Autoren feststellen konnten, unterliegt der Kontrast des daktyloskopischen Bildes am Eingang der Kamera bei seiner Durchleuchtung mit stetigem Licht aufgrund des den Finger durchdringenden Blutstromes zeitlichen Schwankungen (das heißt der Puls des Nutzers). Die dabei zu beobachtende Instabilität der Abbildung führt zur Bildung von Abschnitten mit fehlendem Informationsgehalt und damit zu einer Minderung der Bildqualität, wodurch die Fehlerwahrscheinlichkeit bei der Identifikation zunimmt. Ein weiterer Nachteil dieses Verfahrens ist die Abhängigkeit der gewonnenen Abbildungen von den Umgebungslichtverhältnissen. Es bereitet ferner Schwierigkeiten, mit diesem Verfahren Abbilder "lebender" Finger von Abbildern zu unterscheiden, die zu einem früheren Zeitpunkt gewonnen wurden. Aufgrund dieses Sachverhaltes ist es problematisch, dieses Verfahren zum Beispiel in Codeschlössern oder anderen Einlaßkontrollsystemen zum Einsatz zu bringen.

Ebenso sind Nutzeridentifikationsgeräte bekannt, die eine Kamera mit einer faseroptischen Eingangsoberfläche für den direkten Fingerkontakt, eine gegenüber der Kontaktoberfläche angebrachte Lichtquelle in Form einer Glühbirne zur Durchleuchtung des Fingers und ein am Ausgang der Kamera angeschlossenes Signalbearbeitungsmodul aufweisen (siehe vorstehend bezeichnetes russisches Patent). Diese Geräte haben keine Objektive, wodurch die durch diese verursachten Identifizierungsungenauigkeiten ausgeschlossen werden. Sie zeichnen sich außerdem durch geringe Abmessungen, Zuverlässigkeit und Kompaktheit und eine unkomplizierte Struktur aus. Als photoempfindliche Einheiten kommen in den Kameras dieser Geräte Ladungsverschiebeelemente (CCD) mit einer bildweisen Ladungsverschiebung oder sogenannte "Zweibereich-CCDs", bei denen eine Hälfte der Elemente (Bildaufbaubereich) zur Umsetzung der Lichtimpulse in Ladungsmengen und die andere Hälfte zur Speicherung und Auslesung (Bildspeicherbereich) der Informationen getrennt voneinander angeordnet sind, zum Einsatz. In diesen CCDs wird das Bild im Bildaufbaubereich im Verlauf des Bildvorlaufes aufgebaut und danach sofort in den lichtgeschützten Bildspeicherbereich übertragen (der dazu erforderliche Zeitabschnitt ist nicht größer als die Zeit des Bildrücklaufes). Während in dem von dem vorangegangenen Bild gesäuberten Bildaufbaubereich das nächste Bild aufgebaut wird, erfolgt das Auslesen des vorangegangenen Bildes aus dem Bildspeicherbereich. Damit finden die Prozesse des Bildaufbaus und des Auslesens beim Einsatz derartiger CCDs gleichzeitig statt. Der Einsatz dieser CCDs gewährleistet die Erzeugung von Bildern mit einer ausreichend hohen Qualität. Es sind andere Typen von CCDs bekannt, bei denen für den Bildaufbau und das Auslesen der Ladung unterschiedliche Elemente eingesetzt werden, zum Beispiel Elemente mit bildzeilenweiser Ladungsverschiebung.

Außer den bereits vorstehend genannten Mängeln (siehe auch russisches Patent Nr. 2031625), die auch für diese Geräte charakteristisch sind, müssen noch weitere aufgeführt werden.

Geräte mit einem faseroptischen Eingang für die direkte Bildübertragung (ohne Maßstabanpassung) sind nur für die Abbildung relativ kleiner Hautabschnitte geeignet, deren Größe für eine automatische Identifizierung nicht ausreichend ist. Versuche haben gezeigt, daß eine daktyloskopische Identifizierung erst möglich wird, wenn der zu analysierende Abdruck wenigstens einen Durchmesser von 16 Millimetern hat. Entsprechend den in der Kriminalstatistik unterschiedlicher Länder geltenden Standards werden sogar Abdrücke mit einem Mindestdurchmesser von 24 Millimetern gefordert. Allerdings ist die Herstellung photoempfindlicher Einheiten mit faseroptischem Eingang und einer bildweisen Ladungsverschiebung mit einer Diagonale des aufzubauenden Bildes von 16 Millimetern bis 24 Millimetern ein derzeit schwer zu lösendes technisches Problem. Es sind zwar faseroptische Einheiten mit Maßstabanpassung bekannt, mit denen eine Vergrößerung der abzubildenden Darstellungen (zum Beispiel das Fokon und Lichtleiterprismen - siehe Reklameprospekt der Firma HAMAMATSU, Oktober 1996) und ihr Einsatz als faseroptische Lichtleiter in den betreffenden Geräten möglich wäre, jedoch würde ihr Einsatz zu einem Verlust der Kompaktheit der Geräte führen. Außerdem würde in einem solchen Fall die maximal erzielbare Auflösung auf etwa 5 Linien je Millimeter absinken und damit folgerichtig die Fehlerwahrscheinlichkeit bei der Fingeridentifikation steigen. Aus den genannten Gründen werden diese Geräte in der Praxis nicht eingesetzt.

Die hier beschriebenen Nachteile des Verfahrens und die Grenzen der betreffenden Geräte schränken die Möglichkeiten ihres Einsatzes auf dem Gebiet der automatischen Erkennung daktyloskopischer Abbilder aufgrund der hohen Fehlerwahrscheinlichkeit bei der Identifikation ein.

Die Aufgabe der vorliegenden Erfindung besteht in der Ausarbeitung eines Verfahrens und der Konstruktion eines Gerätes zur Nutzeridentifikation, mit denen die Abhängigkeit der Qualität gewonnener daktyloskopischer Abbilder von der Durchblutung im Finger und von den Umgebungslichtverhältnissen verringert wird, wodurch eine Verbesserung der Qualität und des Informationsgehaltes der daktyloskopischen Abbilder und damit eine Verbesserung der Nutzeridentifikation erreicht wird.

Die gestellte Aufgabe wird durch den Gegenstand des Verfahrens und des Gerätehauptanspruchs gelöst.

In Übereinstimmung mit einer Ausführung dieses Verfahrens wird durch die Kamera während eines bestimmten Zeitabschnittes eine Bildfolge erzeugt. Bei der Weiterverarbeitung der Bilder wird für jedes einzelne Bild ein Signalmittelwert des Bildes oder einzelner Bildabschnitte ermittelt. Die dabei entstehende zeitabhängige Signalmittelwertfolge wird als Kriterium bei der Nutzeridentifikation herangezogen.

Unter Einbereich-CCD wird eine photoempfindliche Einheit verstanden, die keinen gesonderten lichtgeschützten Speicherbereich aufweist. Der Bildaufbau und das Auslesen der Ladung erfolgt in ein und denselben, die photoempfindliche Einheit bildenden Elementen. Derartige Geräte haben in der Fernsehtechnik eine weite Verbreitung gefunden. In den Einbereich-CCDs sind die Prozesse des Bildaufbaus und des Auslesens der Abbildung zeitlich, aber nicht räumlich voneinander getrennt (im Unterschied zu den Zweibereich-CCDs). Einbereich-CCDs sind bedeutend einfacher und billiger herzustellen, da sie im Vergleich mit den Zweibereich-CCDs bei gleichen Abmessungen der photoempfindlichen Einheit nur die Hälfte an Bauteilen aufweisen. Einbereich-CCDs können jedoch nicht bei einer stetigen Beleuchtung des Objektes eingesetzt werden, da bei einem zeitgleichen Ablauf der Bildaufbau- und Ausleseprozesse eine Vermischung der Bilder stattfinden würde.

In Übereinstimmung mit einer Ausführung der Erfindung enthält das Gerät zusätzlich einen Impulsgeber zur Steuerung des Beleuchtungselementes, der zwischen dem Beleuchtungselement und dem Steuermodul der photoempfindlichen Einheit untergebracht ist.

Wie die Autoren der Erfindung festgestellt haben, führt die Beleuchtung des Fingers mit Lichtimpulsen zu einer bedeutenden Verringerung der Ungleichmäßigkeiten und Instabilitäten in den gewonnenen Abbildern und daraus resultierend auch bei den erzeugten Videosignalen. Dieser Effekt ist eine direkte Folge der kurzen Lichtimpulse (ihre Dauer beträgt etwa eine Millisekunde), dank derer der Einfluß des Blutflusses im zu durchleuchtenden Finger auf die Qualität der gewonnenen Abbilder zu einer vernachlässigbaren Größe wird. Außerdem wird durch die Verringerung der Bildaufbauzeit auch der Einfluß der Umgebungslichtverhältnisse auf die Abbildung des Hautreliefs bedeutend reduziert. Somit schafft der Einsatz des erfindungsgemäßen Gerätes die Möglichkeit, anstelle der verschommenen "Bilder", die beim Einsatz des bekannten, mit einem stetigen Lichtstrahl und einer mit der Bildvorlaufzeit übereinstimmenden Belichtungszeit arbeitenden Verfahrens entstehen (siehe russisches Patent Nr. 2031625), klare und scharfe Bilder zu erhalten, in denen alle Informationen über die Durchsichtigkeit des Fingers zu einem bestimmten Zeitpunkt enthalten sind. Diese Qualitätsverbesserung der gewonnenen Abbilder gestattet es, die Fehlerwahrscheinlichkeit bei der Identifizierung zu senken.

Die Bearbeitung einer Bildfolge erlaubt es, den Informationsgehalt der daktyloskopischen Abbilder dank der Gewinnung zusätzlicher biometrischer Daten des Nutzers (zum Beispiel Besonderheiten seines Pulses) zu erhöhen und damit die Sicherheit des Identifikationsprozesses weiter zu verbessern.

Der Einsatz von Impulslichtquellen führt nicht nur zu einer wesentlichen Verbesserung der Bildqualität (wie vorstehend beschrieben), sondern gestattet es, in der Kamera Einbereich-CCDs als photoempfindliche Einheiten einzusetzen. Der Einsatz von Einbereich-CCDs macht es möglich, hochqualitative Abbildungen größerer Flächen zu erhalten. Die Vergrößerung der Flächen führt aber zusammen mit der Verbesserung der Stabilität der Abbilder zu einer weiteren Verringerung der Fehlerwahrscheinlichkeit im Identifikationsprozeß. Die Herstellung von Einbereich-CCDs mit einer Diagonalen des photoempfindlichen Bereiches von 16 Millimetern bis 24 Millimetern und einem faseroptischen Eingang ist eine technisch unkomplizierte Aufgabe, wodurch es möglich wird, relativ einfache und billige Geräte herzustellen. Außerdem entstehen in Geräten mit Einbereich-CCDs geringere Informationsverzerrungen als in Geräten mit anderen Verfahren der Ladungsverschiebung.

Der Einsatz von Einbereich-CCDs in den bekannten, mit einer stetigen Beleuchtung arbeitenden Geräten ist nicht möglich, da das stetige Licht nicht nur während der Bildaufbauphase, sondern auch während der Auslesephase auf die CCDs fällt und damit eine Vermischung der Ladungen eintreten würde, wodurch die Gewinnung klarer Abbilder unmöglich wäre.

Somit ermöglicht es die hier vorgestellte Erfindung, qualitativ hochwertige Abbilder der Fingerhaut zu erhalten, dank derer es möglich ist, automatische Identifizierungsprozesse mit einer geringen Fehlerwahrscheinlichkeit zu realisieren.

Nachfolgend wird eine der Ausführungen der Erfindung bei gleichzeitiger Erläuterung der zugehörigen Figuren detailliert beschrieben.

### Kurzbeschreibung der Figuren

- Figur 1: zeigt die zeitliche Abhängigkeit der Durchsichtigkeit des zur Nutzeridentifikation benutzten Fingers.
- Figur 2: zeigt das Strukturschema des erfindungsgemäßen Gerätes zur Nutzeridentifikation.
- Figur 3: enthält die Zeitdiagramme, anhand derer die Funktionsweise des erfindungsgemäßen Gerätes zu erkennen ist.

### Bevorzugte Ausführung der Erfindung

In Übereinstimmung mit dem vorgeschlagenen Verfahren zur Nutzeridentifikation legt der Nutzer seinen Finger auf eine faseroptische Eingangsoberfläche einer Kamera auf. Während sich die Kamera in der Bildaufbauphase befindet, wird der Finger mit Lichtimpulsen kurzer Dauer von der der Eingangsoberfläche gegenüberliegenden Seite beleuchtet. Die Dauer jedes einzelnen Lichtimpulses ist nicht größer als die Bildrücklaufzeit und kann bei einer Bildrücklaufzeit von 1,6 Millisekunden den Wert von einer Millisekunde annehmen. Das Licht durchdringt den Finger und tritt in die optischen Fasern an den Stellen ein, an denen die Fingerhaut die Eingangsoberfläche der Kamera berührt. Während der Bildaufbauphase erfolgt in der Kamera der Aufbau des Bildes, das heißt auf der Oberfläche der photoempfindlichen Einheit der Kamera wird ein Ladungsrelief aufgebaut, das ein Abbild der Hautoberfläche des Fingers darstellt. Dann wird während des Bildvorlaufes, das heißt in der Phase des Auslesens des Bildes, dieses Ladungsrelief in Standardvideosignale umgesetzt. Weiter werden diese analogen Videosignale mittels bekannter Verfahren in digitale Signalfolgen konvertiert und die so gewonnene daktyloskopische Information mit dem Ziel der Nutzeridentifikation einer Computeranalyse unterzogen.

Dank der geringen Dauer des Bildaufbaus ist der Einfluß der Durchblutung des Fingers und der Veränderungen der Umgebungsbeleuchtung auf die Stabilität des Videosignals vernachlässigbar gering, wodurch es möglich ist, klare, qualitativ gute daktyloskopische Abbilder zu erzeugen.

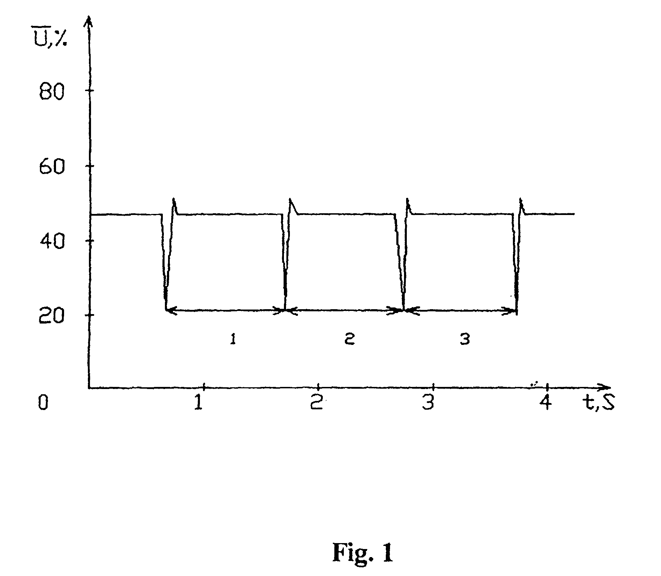

In Übereinstimmung mit der bevorzugten Ausführung der Erfindung wird von der Kamera eine Bildfolge mit den daktyloskopischen Abbildern erzeugt, von denen der Signalmittelwert jedes Bildes oder eines seiner Teile ermittelt wird. Die so ermittelte zeitabhängige Signalmittelwertfolge ist in Figur 1 dargestellt. Diese Folge beschreibt die zeitliche Veränderung der Durchsichtigkeit der Finger und liefert damit zusätzliche Informationen über den zu identifizierenden Nutzer.

So kann zum Beispiel durch die mathematische Bearbeitung der zeitlichen Abhängigkeit der Fingerdurchsichtigkeit, die den Puls des Nutzers charakterisiert, die Periode des Pulses ermittelt werden, die den Zeitintervallen t1, t2, t3 zwischen den Minimalwerten der Kurve entspricht. Die mittlere Pulsperiode eines sich im Ruhezustand befindlichen Menschen beträgt üblicherweise 0,8 Sekunden bis 1,2 Sekunden. Sollte auch nur ein einziges Zeitintervall ti (i = 1, 2, 3 ...) außerhalb der angeführten Grenzen liegen, wird der Nutzeridentifikationsprozeß nicht eingeleitet. Andernfalls wird die Nutzeridentifikation durchgeführt. Wenn die Pulsfrequenz eines konkreten Nutzers bekannt ist und gespeichert wurde, besteht die Möglichkeit des Vergleichs dieser Daten und damit der Nutzeridentifikation durch Einbeziehung des Wertes der Pulsfrequenz. So könnte zum Beispiel eine Person nur dann als Nutzer identifiziert werden, wenn sich ihr aktueller Puls nicht mehr als +- 10% von der gespeicherten Pulsfrequenz unterscheidet. Damit wird die Pulsfrequenz zu einem weiteren Kriterium für die Nutzeridentifikation. Die zusätzlichen, den Puls betreffenden biometrischen Daten senken die Fehlerwahrscheinlichkeit des Identifikationsprozesses, da sie es ermöglichen, den lebenden Finger des Nutzers von einem früher gewonnenen Abdruck dieses Fingers zu unterscheiden. Die vorhandenen Daten über die Veränderungen der Durchsichtigkeit des Nutzerfingers erlauben es, den Puls des Nutzers rechnerisch zu ermitteln und die so gewonnene Durchsichtigkeitskurve analog dem Elektrokardiogramm für medizinische Zwecke einzusetzen.

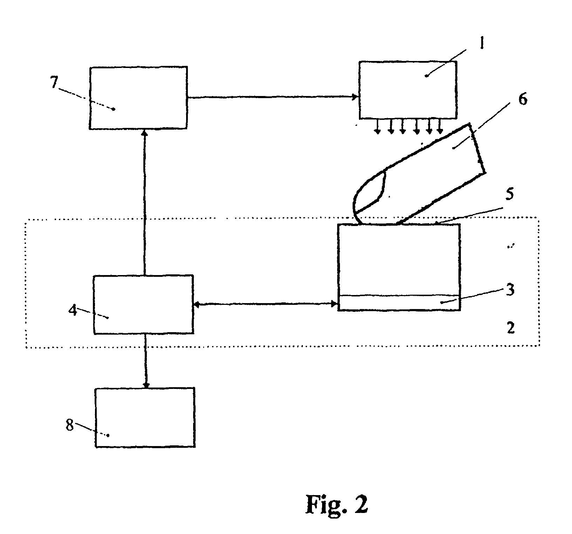

In Figur 2 wird das Strukturschema des erfindungsgemäßen Gerätes zur Nutzeridentifikation dargestellt. Das Gerät besteht aus der Lichtimpulsquelle 1, der Kamera 2 mit einer photoempfindlichen Einheit 3, ausgeführt als CCD, und einem Steuermodul 4 zur Steuerung der photoempfindlichen Einheit. Die Kamera hat eine faseroptische Eingangsoberfläche 5 zur Auflage des Nutzerfingers 6. Ferner verfügt das Gerät über einen Impulsgeber 7 zur Steuerung des Beleuchtungselementes und einen Block 8 zur Informationsbearbeitung.

Das Beleuchtungselement 1 besteht aus Lichtdioden, mit denen rotes Licht aus dem sichtbaren Bereich des Spektrums erzeugt wird. Es befindet sich vor der Eingangsoberfläche 5 in einer Entfernung, die es einerseits erlaubt, zwischen ihm und der Eingangsoberfläche 5 den Finger des Nutzers unterzubringen, und andererseits die Möglichkeit bietet, den Finger mit dem Licht des Beleuchtungselementes zu durchleuchten.

Als Kamera 2 kann eine herkömmliche Fernsehkamera mit Außensynchronisation und einer photoempfindlichen Einheit in Form von CCDs eingesetzt werden.

Die faseroptische Eingangsoberfläche 5 besteht aus einer faseroptischen Platte, wobei der Faserdurchmesser jeder einzelnen Faser sechs Mikrometer beträgt und eine Apertur von wenigstens 1,0 bei einer Wellenlänge von 546 Nanometern aufweist.

Erfindungsgemäß wurde die photoempfindliche Einheit 3 als Einbereich-CCD ausgeführt. So kann zum Beispiel eine photoempfindliche Einheit genutzt werden, bei der der photoempfindliche Bereich aus zwei getrennt steuerbaren Hälften besteht, von denen jede 288 Zeilen photoempfindlicher Elemente enthält. Beide Hälften sind offen für den Lichteinfall und verfügen über eine gemeinsame elektronische Steuerung. Jede Zeile in jeder Hälfte besteht aus 512 photoempfindlichen Elementen. Ein Element des photoempfindlichen Bereiches hat die Abmessungen 18 Mikrometer mal 24 Mikrometer. Es wird mit einer Dreiphasensteuerung bei der Ladungsverschiebung innerhalb des photoempfindlichen Bereiches und seinem Ausgangsregister gearbeitet.

Der Steuerblock 4 ist über eine Verbindungsschiene an die photoempfindliche Einheit 3 angeschlossen und hat die Aufgabe, das aufgebaute Ladungsbild aus letzterer auszulesen und in Standardvideosignale umzuwandeln. Zur Erzeugung der Standardvideosignale befindet sich im Steuerblock ebenfalls ein Generator für Bild-Synchronsignale (in der Figur nicht dargestellt). Der Ausgang dieses Generators stellt einen der Ausgänge der Kamera dar und ist mit dem Eingang des Impulsgebers 7 verbunden.

Der Impulsgeber 7 generiert aus den Bild-Synchronsignalen die Einschaltimpulse für das Beleuchtungselement. Dabei besteht die Möglichkeit, daß der Impulsgeber die Bild-Synchronsignale lediglich verstärkt bzw. aus ihnen Impulse geringerer Dauer mit einer vorgegebenen Verschiebung zu den Bild-Synchronsignalen und einer vorgegebenen Amplitude generiert. Der Ausgang des Impulsgebers 7 ist mit den Lichtdioden des Impulsbeleuchtungselementes 1 verbunden.

Gesetzt den Fall, daß die Kamera Bild-Synchronsignale mit einer für die Erregung der Leuchtdioden ausreichenden Amplitude erzeugt, kann der Impulsgeber 7 entfallen und der Ausgang des Generators für Bild-Synchronsignale unmittelbar mit dem Beleuchtungselement 1 verbunden werden. Es besteht ebenso die Möglichkeit, die Kamera und das Beleuchtungselement über eine externe Synchronsignalquelle oder über die Impulse des Wechselstromnetzes zu synchronisieren.

Der andere Ausgang der Kamera 2 ist mit dem Eingang des Informationsbearbeitungsblockes 8 verbunden. Der Informationsbearbeitungsblock 8 ist in Form eines Multimediapersonalcomputers ausgeführt, der mit einer Videoblasterkarte, zum Beispiel SE100 der Firma Creative Labs, für den Empfang des von der Kamera kommenden Videosignals ausgerüstet ist. Als Software kommen daktyloskopische Identifizierungsprogramme zum Einsatz, wie sie in bekannten Identifizierungsgeräten genutzt werden. Ferner können zusätzliche Programme installiert werden, die die Aufgabe haben, unberechtigte Zugriffe auf den Computer zu unterbinden oder zum Beispiel den Puls des Nutzers zu ermitteln (siehe nachfolgende Funktionsbeschreibung des Gerätes). Die hier genannten Funktionen führt das durch die belorussische Firma OPAK vertriebene Programm PCLOCK aus.

Das Beleuchtungselement 1, die Kamera 2 und der Impulsgeber 7 können konstruktiv in Form eines einzigen Blockes (als Daktyloskop) ausgeführt sein, der im Gehäuse des PC (Informationsblock 8), zum Beispiel in einem 5,25"-Einschub untergebracht wird. Ein derartiges Daktyloskop "DELSY" wird derzeit von der russischen Firma ELSYS hergestellt.

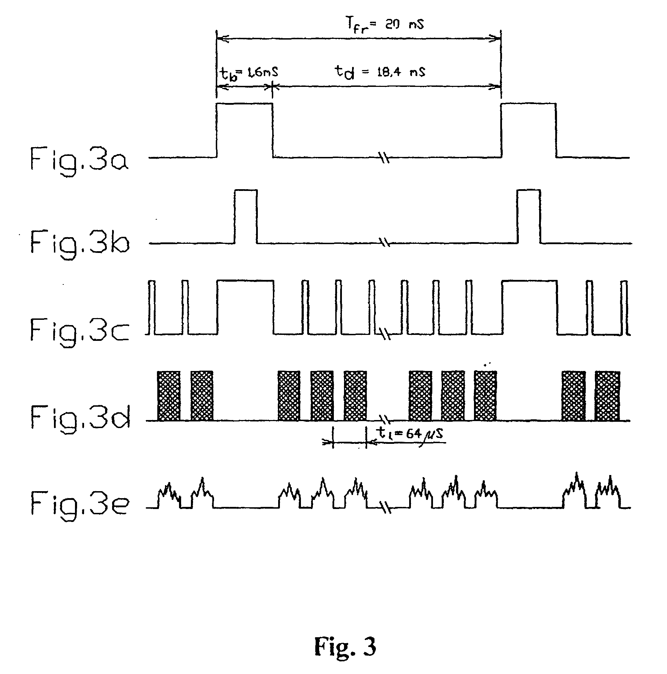

Das erfindungsgemäße Gerät arbeitet folgendermaßen. Beim Einschalten des Gerätes erzeugt der Bild-Synchronsignalgenerator (in den Figuren nicht abgebildet) am Ausgang der Kamera Bild-Synchronsignale (siehe Figur 3a). Periode und Dauer dieser Impulse entsprechen den üblichen Fernsehstandards. Es kann sich zum Beispiel um Signale der CCIR-Norm mit einer Feldfrequenz von 50 sek⁻¹ und einer Bildzeilenzahl von 625 handeln. Die Dauer tb der Signalspitze des Bild-Synchronsignals beträgt 1,6 Millisekunden und die Signalperiode Tfr zwanzig Millisekunden. Es ist einleuchtend, daß auch andere Fernsehstandards genutzt werden können, zum Beispiel mit einer Feldfrequenz von 60 sek⁻¹ und einer Bildzeilenzahl von 525. Die Bild-Synchronsignale werden an den Eingang des Impulsgebers 7 geleitet, der diese in Signale geringerer Dauer und einer zur Erregung des Beleuchtungselementes ausreichenden Amplitude umwandelt. Die Ausgangssignale des Impulsgebers 7 sind in Figur 3b dargestellt. Das Beleuchtungselement 1 erzeugt Lichtimpulse, die den vom Impulsgeber 7 kommenden Erregungssignalen entsprechen.

Der Nutzer legt seinen Finger auf die faseroptische Oberfläche der Kamera 2 auf. Der Finger wird von Lichtimpulsen durchleuchtet, wodurch auf der Oberfläche der photoempfindlichen Einheit 3 eine daktyloskopische Abbildung entsteht.

Auf die photoempfindliche Einheit treffen von der Kamera Steuersignale auf, die den Aufbau eines Ladungsbildes des entsprechenden daktyloskopischen Abbildes und das nachfolgende Auslesen dieses Bildes bewirken. In den Figuren 3c und 3d sind die Steuersignale für eine Einbereichs-Dreiphasen-CCD abgebildet. Das in Figur 3c dargestellte Signal wird an eine Phase des photoempfindlichen Bereiches der photoempfindlichen Einheit angelegt, während das in Figur 3d dargestellte Signal an eine der Phasen des Ausgangsregisters der Einheit geleitet wird. Für die weiter oben genannte CCIR-Norm beträgt die Periode t1 zum Auslesen einer Zeile 64 Mikrosekunden. Die Steuersignale für die beiden anderen Phasen des CCD haben eine analoge Struktur. Dabei sind aber die verschiebeimpulse der einen Phase zu den Verschiebeimpulsen der anderen Phase verschoben.

Die Zeitintervalle tb beschreiben die Zeit, in der sich die Kamera in der Bildaufbauphase befindet, das heißt während der Zeitintervalle tb wird das daktyloskopische Abbild auf der Oberfläche der photoempfindlichen Einheit in Form eines Ladungsbildes aufgebaut.

Während des den Bildvorlauf beschreibenden Zeitabschnitts td befindet sich die Kamera in der Auslesephase. Der in Figur 3c und 3d im Intervall td dargestellte Teil des Steuersignals entspricht dem Verschiebeimpuls. Durch die Verschiebeimpulse wird das zeilenweise Auslesen des Ladungsbildes nach bekannten Verfahren gewährleistet. Das in Figur 3c dargestellte Signal beschreibt die ausgelesene Abbildung, wobei die Auslesedauer einer Zeile t1 = 64 Mikrosekunden beträgt. Dieses Signal trifft auf den Eingang des Steuermoduls 4 auf. Durch das Steuermodul 4 wird das von der photoempfindlichen Einheit ausgelesene Bildsignal verstärkt und in ein Standardvideosignal umgewandelt.

Das Videosignal wird in den PC übertragen, wo es durch die Videoblaster (in den Figuren nicht dargestellt) digitalisiert und anschließend mit vorhandener Software bearbeitet wird. So realisiert zum Beispiel das Programm PCLOCK folgenden Bearbeitungsalgorithmus:

Es wird eine Bildfolge analysiert. Dabei dient das erste Bild zur Gewinnung der daktyloskopischen Daten, das heißt es werden die Koordinaten der charakteristischen daktyloskopischen Merkmale relativ zum Zentrum des Papillarlinienmusters ermittelt. Die so gewonnenen daktyloskopischen Daten werden danach mit den zu einem früheren Zeitpunkt gespeicherten daktyloskopischen Daten berechtigter Nutzer (Archiv des Programms PCLOCK) verglichen. Mit Hilfe der folgenden Bilder wird die Pulsfrequenz des Nutzers ermittelt. Dies geschieht durch die Ermittlung des Videosignalwertes für einen vorgegebenen Teil jedes Bildes der Bildfolge und einer nachfolgenden Analyse der zeitlichen Abhängigkeit dieser Mittelwerte. Die betreffende Abhängigkeit ist in Figur 1 dargestellt. Die so ermittelten Werte der Pulsfrequenz können ebenfalls mit den zu einem früheren Zeitpunkt gespeicherten Pulsfrequenzen berechtigter Nutzer verglichen werden. Bei Übereinstimmung der daktyloskopischen Informationen und des Pulses mit den abgespeicherten Daten eines berechtigten Nutzers wird der Nutzer identifiziert und erhält die Möglichkeit, an dem PC zu arbeiten. Anderenfalls blockiert das Programm PCLOCK den PC. Das Identifizierungsergebnis wird auf dem Bildschirm des PC ausgegeben. Die Verwendung von hochqualitativen Papillarlinienabbildern und der biometrischen Daten über den Puls des Nutzers führt zu einer Verringerung der Fehlerwahrscheinlichkeit bei der Nutzeridentifikation.

Eine vereinfachte Variante der Nutzeridentifikation besteht in der Prüfung der Übereinstimmung ermittelter daktyloskopischer Daten mit den zu einem früheren Zeitpunkt gespeicherten daktyloskopischen Abbildern. Dabei wird die Registrierung eines Pulses vorausgesetzt. Damit wird es möglich, einen Abdruck vom "lebenden Finger" des Nutzers von seinen zu einem früheren Zeitpunkt angefertigten Fingerabdrücken zu unterscheiden.

In der einfachsten Ausführung werden ausschließlich die daktyloskopischen Daten ausgewertet. Eine Ermittlung des Pulses erfolgt nicht. In diesem Fall wird das daktyloskopische Abbild im Block 8 mit den Abbildern berechtigter Nutzer verglichen. Für diesen Vergleich wird dann lediglich ein einziges Bild benötigt, das heißt es entfällt die Notwendigkeit, eine Bildfolge zu bearbeiten.

Mit diesem Gerät ist es ebenso möglich, die daktyloskopischen und die Pulsdaten neuer berechtigter Nutzer in das System aufzunehmen, um sie in der Zukunft zur Nutzeridentifikation heranzuziehen.

Die Autoren haben Vergleichsuntersuchungen mit drei daktyloskopischen Geräten durchgeführt, bei denen eine Beleuchtung des Fingers durchgeführt wird: (1) - mit reflektiertem Licht, (2) - mit stetigem durchdringendem Licht (siehe russisches Patent Nr. 2031625) und (3) - mit den erfindungsgemäßen durchdringenden Lichtimpulsen (ohne Bestimmung der Pulsdaten). Zur Nutzeridentifikation wurde in allen drei Fällen ein und dasselbe Programm genutzt, dem ein gespeichertes Archiv von 1000 Fingerabdrücken zur Verfügung stand. Die Versuchsergebnisse wurden in der folgenden Tabelle dargestellt (dabei wurde die Anzahl der Identifizierungsfehler ins Verhältnis zu dem ermittelten Minimalwert gesetzt).

| | | | |
|---|---|---|---|
| Typ des Gerätes | 1 | 2 | 3 |
| relative Fehlerhäufigkeit | 10 | 9 | 1 |

Das erzielte Ergebnis macht die prinzipielle Überlegenheit des erfindungsgemäßen Gerätes im Vergleich mit anderen Geräten deutlich, selbst dann, wenn keine Pulsdaten ausgewertet werden.

Die Erfindung kann auf einem breiten Spektrum unterschiedlichster Wirkungsbereiche der Menschen zum Einsatz gebracht werden - so zum Beispiel als Wohnungstürschloß, in Nutzererkennungsmodulen für PCs, in Einrichtungen zur Überprüfung von Nutzeridentifikationsdaten beim Zugang in Computernetze, in Diagnosegeräten für unterschiedliche Erkrankungen und im System des bargeldlosen Zahlungsverkehrs. Die Einfachheit der technischen Realisierung und das weite Einsatzspektrum unterstreichen die Aktualität der vorliegenden Erfindung.

### Industrielle Einsetzbarkeit der Erfindung

Die Erfindung kann in beliebigen Wirkungsbereichen des Menschen, bei denen eine Nutzeridentifikation erforderlich ist, zum Beispiel auf dem Gebiet der Computertechnik, der Medizin, der Kriminalistik, der Schutz- und Einlaßkontrollsysteme sowie im Bereich des Finanz- und Bankensektors eingesetzt werden.

## Patentansprüche

1. Verfahren zur Nutzeridentifikation, wobei ein Finger des zu identifizierenden Nutzers auf eine faseroptische Eingangsoberfläche (5) einer Kamera (2) aufgelegt wird, die Beleuchtung des Fingers (6) mit diesen durchdringendem Licht und die Nutzeridentifikation anhand der in der Kamera (2) gewonnenen Abbildungssignale erfolgt, **dadurch gekennzeichnet, daß** der Finger (6) mit Lichtimpulsen beleuchtet wird, die mit der Kamera synchronisiert sind, und daß die Kamera (2) eine Bildfolge liefert, bei deren Weiterverarbeitung für jedes einzelne Bild ein Signalmittelwert des Bildes oder einzelner Bildabschnitte bestimmt wird, und daß die dabei entstehende zeitabhängige Signalmittelwertfolge als zusätzliches Kriterium bei der Nutzeridentifikation genutzt wird.

2. Gerät zur Nutzeridentifikation mit Mitteln zur Durchführung des Verfahrens gemäß Anspruch 1, wobei ein Finger des zu identifizierenden Nutzers auf eine faseroptische Eingangsoberfläche (5) einer Kamera (2) aufgelegt wird, die Beleuchtung des Fingers (6) mit diesen durchdringendem Licht eines Beleuchtungselements (1) erfolgt und die Nutzeridentifikation anhand der in der Kamera (2) gewonnenen Abbildungssignale erfolgt, wobei das Beleuchtungselement (1) als Impulslichtquelle ausgeführt ist, die mit dem Steuermodul (4) der photoempfindlichen Einheit (3) der Kamera (2) synchronisiert ist, und die Kamera (2) mit einem an deren Ausgang angeschlossenem Signalbearbeitungsmodul (8) versehen ist.

3. Gerät nach Anspruch 2, **dadurch gekennzeichnet, daß** die photoempfindliche Einheit (3) in Form einer Einbereich-CCD gebildet ist.

4. Gerät nach Anspruch 3, **dadurch gekennzeichnet, daß** ein Impulsgeber (7) zur Steuerung des Beleuchtungselementes (1) vorgesehen ist, der zwischen dem Steuermodul (4) der photoempfindlichen Einheit (3) und dem Beleuchtungselement (1) angeordnet ist.

## Claims

1. Process for user identification wherein a finger of the user to be identified is placed on a fibre-optic input surface (5) of a camera (2), wherein the finger (6) is illuminated with light which penetrates the finger, and the user is identified on the basis of the image signals obtained from the camera (2), **characterised in that** the finger (6) is illuminated with light impulses, which are synchronised with the camera, that the camera (2) provides a sequence of images, during the further processing of which an average-signal value for the image or for individual portions of the image is determined for each individual image, and that the time-dependent sequence of average-signal values obtained in this manner is used as an additional criterion for user identification.

2. Device for user identification with means for implementation of the process according to claim 1, wherein a finger of the user to be identified is placed on a fibre-optic input surface (5) of a camera (2), wherein the finger (6) is illuminated with light, which is derived from a lighting element and penetrates the finger, wherein identification of the user takes place on the basis of the image signals obtained from the camera (2), wherein the lighting element (1) is designed as a pulsed-light source, which is synchronised with the control module (4) of the photo-sensitive unit (3) of the camera (2), and the camera (2) is provided with a signal-processing module (8) connected to its output.

3. Device according to claim 2, **characterised in that** the photo-sensitive unit (3) is designed in the form of a single-range CCD.

4. Device according to claim 3, **characterised in that** a pulse generator (7) is provided for the control of the lighting element (1), which is arranged between the control module (4) of photo-sensitive unit (3) and the lighting element (1).

## Revendications

1. Procédé d'identification de l'utilisateur, un doigt de l'utilisateur à identifier étant posé sur une surface d'entrée (5) à fibres optiques d'une caméra (2), l'éclairage du doigt (6) étant effectué avec de la lumière traversant celui-ci et l'identification de l'utilisateur s'effectuant à l'aide des signaux de reproduction obtenus dans la caméra (2), **caractérisé en ce que** le doigt (6) est éclairé par des impulsions lumineuses qui sont synchronisées avec la caméra, **en ce que** la caméra (2) fournit une suite d'images, pendant le traitement ultérieur de laquelle une valeur moyenne de signal de l'image ou de différentes sections d'image est déterminée pour chaque image, et **en ce que** la suite de valeurs moyennes de signal ainsi formée en fonction du temps est utilisée comme critère supplémentaire lors de l'identification de l'utilisateur.

2. Appareil d'identification de l'utilisateur avec des moyens pour exécuter le procédé selon la revendication 1, un doigt de l'utilisateur à identifier étant posé sur une surface d'entrée (5) à fibres optiques d'une caméra (2), l'éclairage du doigt (6) étant effectué avec la lumière d'un élément d'éclairage (1) traversant le doigt et l'identification de l'utilisateur s'effectuant à l'aide des signaux de reproduction obtenus dans la caméra, l'élément d'éclairage (1) étant réalisé comme une source de lumière pulsée qui est synchronisée avec le module de commando (4) de l'unité photosensible (3) de la caméra, la caméra (2) étant munie d'un modula de traitement de signaux (8) raccordé à sa sortie.

3. Appareil selon la revendication 2, **caractérisé en ce que** l'unité photosensible (3) est en forme d'un dispositif à couplage de charge à une zone.

4. Appareil selon la revendication 3, **caractérisé en ce qu'**il est prévu, pour commander l'élément d'éclairage (1), un générateur d'impulsions (7) disposé entre le module de commande (4) de l'unité photosensible (3) et l'élément d'éclairage (1).
